# EUROPEAN PATENT SPECIFICATION

(11) **EP 4 010 224 B1**
(45) Date of publication and mention of the grant of the patent: **19.07.2023**
(21) Application number: 20753705.1
(22) Date of filing: 04.08.2020
(51) Int. Cl.: B60N 2/809, B60N 2/847, B60N 2/80, B60N 2/90, B60N 2/844

(54) **A HEADREST FOR A VEHICLE SEAT**
RÜCKENLEHNE FÜR EINEN FAHRZEUGSITZ
APPUI-TÊTE POUR SIÈGE DE VÉHICULE

(30) Priority: 07.08.2019 IN 201941032048
(43) Date of publication of application: 15.06.2022
(73) Proprietor: VOLVO TRUCK CORPORATION, 405 08 Göteborg (SE)
(72) Inventor: KANNAN T, Gokula, Karnataka 560036 Bangalore (IN); KUMAR, Praveen, 636305 Tamilnadu (IN)
(74) Representative: Zacco Sweden AB
(86) International application number: PCT/EP2020/071862
(87) International publication number: WO 2021/023730

(56) References cited:
- EP-A1- 3 176 029
- US-A- 5 992 937
- US-A1- 2014 210 245

## Description

### TECHNICAL FIELD

The invention concerns a headrest for a vehicle seat, in particular for the driver's seat of a truck.

The invention can be applied in heavy-duty vehicles, such as trucks, buses and construction equipment. Although the invention will be described with respect to a truck, the invention is not restricted to this particular vehicle, but may also be used in other vehicles such as railway vehicles (trains, tramways, etc.), military vehicles, as well as aircraft and helicopters. In summary, the invention could apply to any seat intended to accommodate a driver (or pilot) for long hours.

### BACKGROUND

It is known that headrests are adjustable in height with respect to the backrest. This allows the driver to adapt this part of the seat to his morphology, and in particular to his size.

This also helps to avoid, or at least minimize, the damage caused by whiplash in the event of an accident.

To do this, it is essential that the headrest is properly adjusted.

In particular, the headrest must be adjusted so that it is neither too low nor too far from the driver's neck. Also, the upper edge of the cushion should preferably reach the top of the skull.

To provide even more comfort, some headrests can also be adjusted in the forward/reverse direction (in addition to the up/down direction). The driver can then move the headrest more or less forward, so as to avoid any empty space between his head and the headrest Document EP 3 176 029 A1 discloses a headrest according to the preamble of claim 1.

US 8,038,219 B2 and US 7,871,129 B2 disclose examples of head restraints that can be adjusted from front to back (or back to front) with respect to the backrest.

US 5,642,918 and US 10,099,582 B2 disclose examples of headrests that can be more or less inclined, so they can be adjusted in rotation. However, the mechanisms used to ensure this type of adjustment are relatively complex (and expensive), which is why they are relatively rare on vehicles.

It is these disadvantages that the invention particularly intends to remedy, by proposing a headrest equipped with a new adjustment system, which is simpler to use and easier to implement.

### SUMMARY

The features of the head restraint according to the invention are defined in claim 1.

Thanks to the invention, the headrest can be easily adjusted by acting on the control rod, for example by pressing a button. As soon as the button is released, the headrest automatically locks into the desired position. The adjustment mechanism is therefore very simple, easy to assemble and very robust over time.

Further advantages and advantageous features of the invention are disclosed in the following description and in the dependent claims.

### BRIEF DESCRIPTION OF THE DRAWINGS

The invention and other advantages of the invention will appear more clearly in the light of the description that follows of a method of making a headrest, given only as an example and made with reference to the attached drawings in which:
- Figure 1 is a perspective view of a truck conforming to the invention, including a seat with a headrest depending on the invention;
- Figures 2 and 3 are side views of the headrest that is the subject of the invention, in two distinct configurations;
- Figures 4, 5 and 6 are respectively top, side and front views of the mechanism inside the headrest allowing it to rotate over a certain adjustment range;

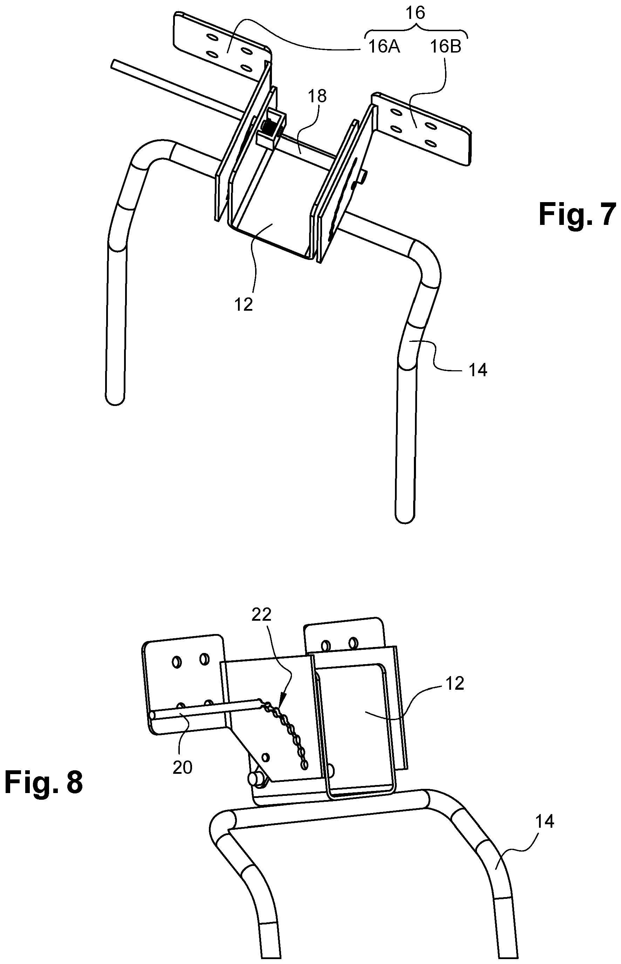

- Figures 7 and 8 are two perspective views of the mechanism from different sides;
- Figures 9 and 10 are two side views of the adjustment mechanism in position inside the headrest, showing two headrest adjustment positions;
- Figures 11 and 12 are detailed views of the adjustment mechanism;
- Figures 13 and 14 are cross-sectional views showing in detail the rotational adjustment possibilities of the head restraint;
- Figures 15 and 16 are longitudinal sections along lines XV and XVI of Figures 13 and 14 respectively.

### DETAILED DESCRIPTION OF EXAMPLE EMBODIMENTS OF THE INVENTION

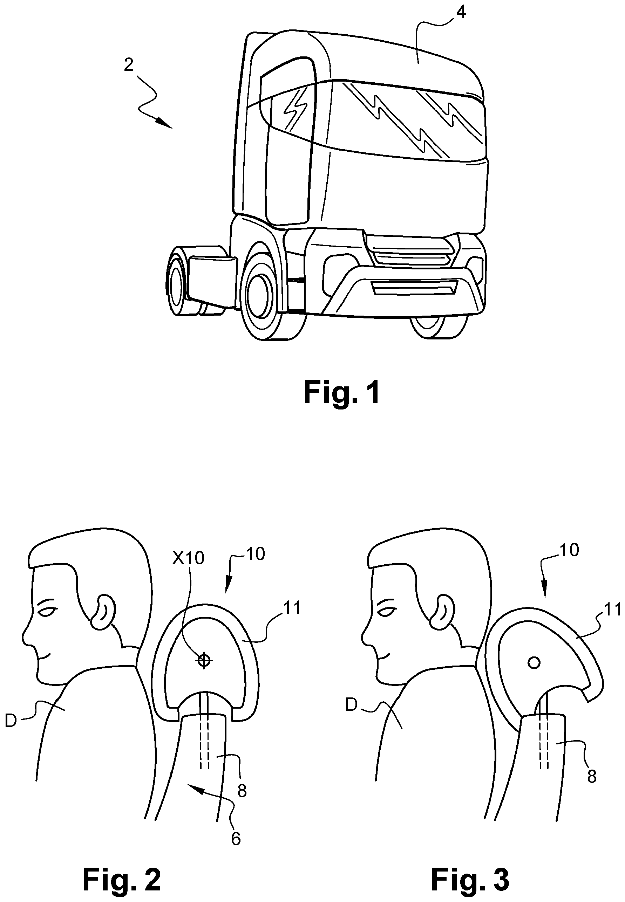

Figure 1 shows a vehicle, in particular a truck 2, provided with a cabin 4 inside which is arranged a seat 6 on which the truck driver can sit. Even if Figure 1 shows a truck, it is obvious that the invention can be applied to any type of road vehicle, such as passenger cars, buses, construction machinery, etc. Also, one could consider applying the invention to railway vehicles (trains, trams, etc.), military vehicles, as well as aircraft and helicopters. In summary, the invention could apply to any seat intended to accommodate a driver (or pilot) for long hours.

Seat 6 is partly represented in Figures 2 and 3 only, with a driver D present. Seat 6 includes a backrest 8 at the upper end of which is arranged a headrest 10 (or "head restraint") allowing the driver to rest his head during journeys, especially during long journeys. In this document, the terms "upper" and "lower" (and assimilated) are to be interpreted in relation to a vehicle operating configuration, i.e. in a rolling vehicle configuration.

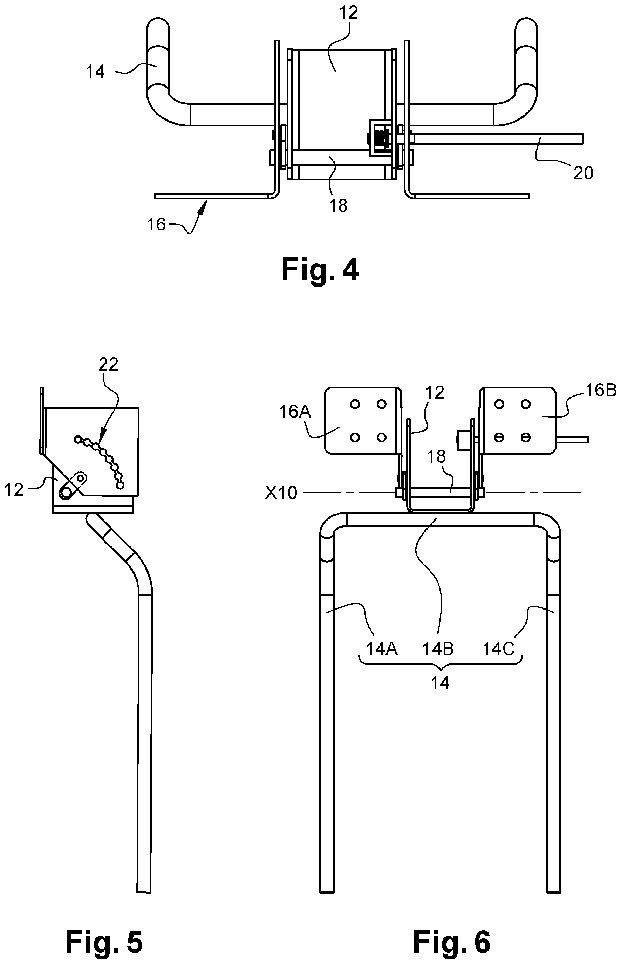

Headrest 10 includes a cushion 11 which is shown in Figures 2 and 3 only and which encloses a mechanism for adjusting the orientation of the headrest 10 about a horizontal axis X10. It is this mechanism that is described below and that is represented in Figures 4 and following.

Headrest 10 includes a first part 12 which, in the following, can also be referred to as the "fixed part".

Typically, the headrest 10 includes a frame 14, usually made of metal, to which the first part 12 is attached. This frame 14 includes two parallel rods 14A and 14C, intended to be pushed inside two holes provided in the upper part of the seat backrest (See figures 2 and 3).

Advantageously, rods 14A and 14C comprise notches (not shown) to adjust the headrest 10 in height with respect to the top of the backrest 8. Since this type of height adjustment for headrest is very common, it is not described further.

Also, rods 14A and 14C are connected to each other in the upper portion by a crossbar 14B (See figure 6).

Preferably, and as shown in figures 4 to 6 for example, the fixed part 12 is a U-shaped metal sheet (with a flat bottom). The two branches of the U extend substantially vertically, while the bottom of the U is substantially horizontal. The bottom of the U, i.e. the transverse part of the fixed part 12, is arranged at the bottom of part 12.

Typically, the first part 12 is attached to the crossbar 14B. Specifically, the bottom of part 12 is attached to the crossbar 14B of the frame 14, for example welded above it. Obviously, this is not the only way to fix these two parts together: Any other appropriate means of fixing can be used (crimping, gluing, etc.).

Headrest 10 also includes a second part 16 that can be rotated relative to the first part 12. In the following, this second part 16 can also be referred to as the "moving part".

In the example, the cushion 11 is fixedly attached to the second part 16 of the headrest 10, i.e. the cushion 11 rotates at the same time as the part 16 (See figures 2 and 3).

Typically, the movable part 16 is articulated on the fixed part 12. This means that the moving part 16 is articulated around a shaft 18 passing through the two parallel walls of the fixed part 12 (See figure 4 for instance). This shaft 18 is centred on the rotation axis X10 of the headrest.

Preferably, and as shown on figure 6, the second part 16 includes two distinct wings 16A and 16B arranged on either side of the fixed part 12.

In the example, these two wings 16A and 16B are L-shaped. One of the legs of the L extends parallel to the branches of the U forming the fixed part 12, while the other leg logically extends perpendicularly to it. Specifically, the perpendicular leg of each wing 16A or 16B is arranged on the front side, i.e. on the side of the driver's head in a mounted configuration.

Headrest 10 also includes a rod 20 for controlling the relative movement between the first part 12 and the second part 16. The second part 16, i.e. the movable part, has an opening 22 for receiving the rod 20, which is oblong in shape and extends curvilinearly in length (i.e. in an arc).

Advantageously, the pivot axis X10 of headrest 10 (and moving part 16) passes through the centre of curvature of opening 22.

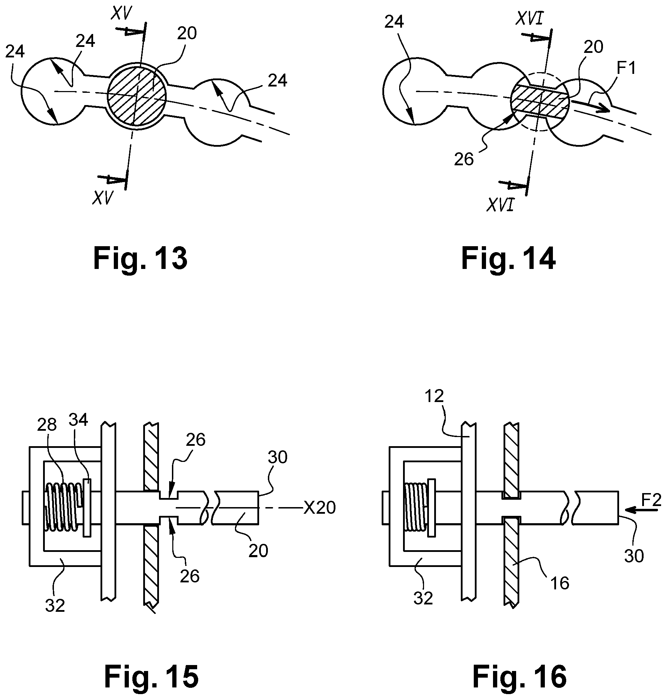

As shown on figures 13 and 14, cavities (or recesses) 24 are provided along the opening 22. Preferably, rod 20 is circular in cross-section and the cavities 24 (i.e. the recesses) of the opening are complementary in shape, i.e. circular in shape as well.

Preferably, there are two rows of recesses 24 (on each side then) extending along the opening 22.

Advantageously, and as shown on figures 15 and 16, rod 20 defines at least one transverse slot 26 on its radial surface, preferably in the shape of a flattened area (i.e. the bottom of slot 26 is flat). Precisely, these are two transverse slots 26 which are arranged diametrically opposite each other, respectively on the upper and lower side of rod 20. The two transverse slots 26 are located at the same (axial) level along the rod 20.

The rod 20 then includes two portions: A first portion of the rod 20 has a circular cross-section, while a second portion of the rod 20 has an oblong cross-sectional shape.

Rod 20 is movable between an adjustment position, shown in figures 14 and 16 in particular, in which rod 20 does not prevent relative rotational movement between the first part 12 and the second part 16 about the axis X10 and a locked position, shown in figures 13 and 15 in particular, in which rod 20 is stuck (or trapped) inside one of the cavities 24 of the opening 22, thus preventing relative rotational movement between the first part 12 and the second part 16.

Typically, rod 20 defines a longitudinal axis X20 (See figure 15) and the movement of rod 20 between its adjustment position and its locked position is a movement along the axis X20, i.e. it is a translational movement (motion in a straight line without rotation or other deformation). This is visible on figures 15 and 16 in particular.

As shown on figure 16, headrest 10 includes in the example a push button 30 allowing a user to move the rod 20, along its longitudinal axis, between its locked position and its adjustment position. This push button 30 protrudes to the side of the cushion 11, so that it can be pushed in by the user.

Here, push button 30 is arranged at one (longitudinal) end of the rod 20. Preferably, the button 30 is integral with the rod 20, meaning that the button 30 and the rod 20 are in one single part.

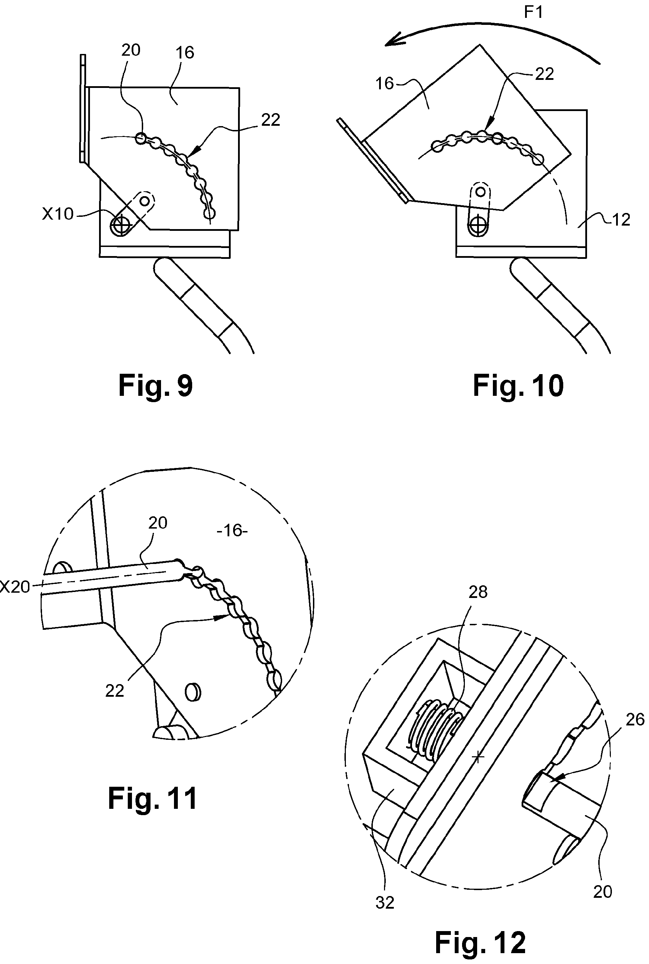

In the example, and as shown on figures 12 and 15, headrest 10 also includes a means 28 for returning the rod 20 to the locked position. Preferably, this return means 28 is an elastic return means, such as a spring. Typically, and as shown on figure 15, spring 28 is arranged between a flange 34 of the rod 20 and a support 32 (used as counter-support) attached to the fixed part 12.

This support 32 is U-shaped. It is attached inside the fixed part 12, against one of the parallel walls of part 12.

In the example, spring 28 is a compression spring, i.e. it stores mechanical energy when compressed and therefore exerts a constant return force as long as it is held in the compressed position.

When the driver wishes to adjust the orientation of headrest 10, i.e. the position of the headrest around the axis X10, he presses the push button 30 (as represented by arrow F2 on figure 16), which moves the rod 20 from the locked position (Figure 15) to the adjustment position (Figure 16). In this adjustment position, the two transverse slots 26 are axially at the same level as the opening 22 and each oriented radially towards a cavity 24. This means that it is the second portion of the rod 20 (comprising an oblong cross-sectional shape) which is received in the opening 22, so there is no obstacle to slide the rod 20 along the opening 22. The user can then tilt the movable part 16 of the headrest (and the cushion 11) forward or backward, as represented by arrow F1 on figures 10 and 14.

Once the user has found the correct position, he releases the button 30. The rod 20 then automatically returns to the locked position (Figure 15) under the return force of the spring 28. In the locked position, it is the first portion of the rod 20 (comprising a circular cross-sectional shape) which is received in a cavity 24 of the opening 22 and a locking in position of the part 16 with respect to the part 12 is obtained.

It is to be understood that the present invention is not limited to the embodiment described above and illustrated in the drawings; Rather, the skilled person will recognize that many changes and modifications may be made within the scope of the appended claims.

For example, one could consider moving from the locked position to the adjustment position (and inversely) by moving the rod 20 around its longitudinal axis rather than pushing it.

Also, the first part 12 could be the moving part and the second part 16 the fixed part.

According to another embodiment not shown, only one transverse slot 26 could be provided on the rod 20. In this respect, the opening 22 would include only one row of recesses 24.

## Claims

1. Headrest (10) for a vehicle seat, comprising:
- a first part (12);
- a second part (16) that is able to rotate with respect to the first part (12);
- a control rod (20) for the relative movement between the first part and the second part; **characterized in that** the second part comprises an arcuate opening (22) for receiving the rod (20), said opening (22) comprising cavities (24);
and **in that** the rod (20) is movable between:
- an adjustment position in which the rod (20) does not prevent the relative rotational movement between the first part (12) and the second part (16); and
- a locked position in which the rod (20) is trapped inside one of the cavities (24) of the opening (22), thus preventing relative rotational movement between the first part and the second part.

2. A headrest according to claim 1, **wherein** the rod (20) defines a longitudinal axis (X20) and wherein the movement of the rod between its adjustment position and its locked position is a movement along the longitudinal axis.

3. A headrest according to claim 1 or 2, further comprising a means (28), preferably a spring, for automatically returning the rod (20) to the locked position.

4. A headrest according to any one of the preceding claims, **wherein** the rod (20) defines at least one transverse slot (26), preferably in the shape of a flattened area.

5. Headrest according to previous claim, **wherein** the rod (20) defines a longitudinal axis (X20) and **wherein,** in the adjustment position, the transverse slot (26) is axially at the same level as the opening and oriented radially towards a cavity.

6. A headrest according to any one of the preceding claims, **wherein** the rod (20) is of circular cross-section and **wherein** the cavities (24) of the opening (22) are of complementary shape.

7. Headrest according to any one of the preceding claims, **wherein** the second part (16) is articulated on the first part (12).

8. Headrest according to the previous claim, **wherein** the pivot axis (X10) of the movable part passes through the centre of curvature of the opening (20).

9. Headrest according to any one of the preceding claims, comprising a frame (14) on which the first part (12) is fixed, this frame having two parallel rods (14A, 14B) , intended to be pushed inside two holes provided in the upper part of the backrest.

10. Headrest according to any one of the preceding claims, **wherein** the second part (16) includes a cushion (11).

11. Headrest according to any one of the preceding claims, **wherein** the opening (22) delimits two rows of cavities (24) extending along the opening, each on one side of the opening.

12. A headrest according to any one of the preceding claims, further comprising a push button allowing a user to move the rod (20) along its longitudinal axis (X20), between its locked position and its adjustment position.

13. Seat for a vehicle, in particular for a bus, truck or construction machine, comprising a headrest according to any one of the preceding claims.

14. Vehicle comprising a seat according to the previous claim.

## Patentansprüche

1. Kopfstütze (10) für einen Fahrzeugsitz, umfassend
- ein erstes Teil (12);
- ein zweites Teil (16), das in der Lage ist, sich in Bezug auf das erste Teil (12) zu drehen;
- eine Steuerstange (20) für die relative Bewegung zwischen dem ersten Teil und dem zweiten Teil;
**dadurch gekennzeichnet, dass**
das zweite Teil eine bogenförmige Öffnung (22) zum Aufnehmen der Stange (20) umfasst, wobei die Öffnung (22) Hohlräume (24) umfasst;
und dadurch, dass die Stange (20) bewegbar ist zwischen:
- einer Anpassungsposition, in welcher die Stange (20) die relative Drehbewegung zwischen dem ersten Teil (12) und dem zweiten Teil (16) nicht verhindert; und
- einer verriegelten Position, in welcher die Stange (20) in einem der Hohlräume (24) der Öffnung (22) eingeschlossen ist, wodurch die relative Drehbewegung zwischen dem ersten Teil und dem zweiten Teil verhindert wird.

2. Kopfstütze nach Anspruch 1, **wobei** die Stange (20) eine Längsachse (X20) definiert und wobei die Bewegung der Stange zwischen ihrer Anpassungsposition und ihrer verriegelten Position eine Bewegung entlang der Längsachse ist.

3. Kopfstütze nach Anspruch 1 oder 2, ferner umfassend ein Mittel (28), vorzugsweise eine Feder, zum automatischen Zurückbringen der Stange (20) in die verriegelte Position.

4. Kopfstütze nach einem der vorhergehenden Ansprüche, **wobei** die Stange (20) mindestens einen Querschlitz (26), vorzugsweise in der Form eines abgeflachten Bereichs, definiert.

5. Kopfstütze nach dem vorherigen Anspruch, **wobei** die Stange (20) eine Längsachse (X20) definiert und **wobei,** in der Anpassungsposition, der Querschlitz (26) axial auf demselben Niveau wie die Öffnung liegt und radial in Richtung eines Hohlraums ausgerichtet ist.

6. Kopfstütze nach einem der vorhergehenden Ansprüche, **wobei** die Stange (20) einen kreisförmigen Querschnitt aufweist und **wobei** die Hohlräume (24) der Öffnung (22) eine komplementäre Form aufweisen.

7. Kopfstütze nach einem der vorhergehenden Ansprüche, **wobei** das zweite Teil (16) an das erste Teil (12) angelengt ist.

8. Kopfstütze nach dem vorherigen Anspruch, **wobei** die Schwenkachse (X10) des bewegbaren Teils durch den Krümmungsmittelpunkt der Öffnung (20) verläuft.

9. Kopfstütze nach einem der vorhergehenden Ansprüche, umfassend einen Rahmen (14), an dem das erste Teil (12) fixiert ist, wobei dieser Rahmen wie parallele Stangen (14A, 14B) aufweist, die in zwei Löcher gedrückt werden sollen, die in dem oberen Teil der Rückenstütze bereitgestellt sind.

10. Kopfstütze nach einem der vorhergehenden Ansprüche, **wobei** das zweite Teil (16) ein Polster (11) beinhaltet.

11. Kopfstütze nach einem der vorhergehenden Ansprüche, **wobei** die Öffnung (22) zwei Reihen von Hohlräumen (24) begrenzt, die sich entlang der Öffnung erstrecken, und zwar jede auf einer Seite der Öffnung.

12. Kopfstütze nach einem der vorhergehenden Ansprüche, ferner umfassend eine Drucktaste, die es einem Benutzer ermöglicht, die Stange (20) entlang ihrer Längsachse (X20) zwischen ihrer verriegelten Position und ihrer Anpassungsposition zu bewegen.

13. Sitz für ein Fahrzeug, insbesondere für einen Bus, einen Lastkraftwagen oder eine Baumaschine, umfassend eine Kopfstütze nach einem der vorhergehenden Ansprüche.

14. Fahrzeug, umfassend einen Sitz nach dem vorherigen Anspruch.

## Revendications

1. Appui-tête (10) pour siège de véhicule, comprenant :
- une première partie (12) ;
- une seconde partie (16) qui est apte à tourner par rapport à la première partie (12) ;
- une tige de commande (20) pour le mouvement relatif entre la première partie et la seconde partie ;
**caractérisé en ce que**
la seconde partie comprend une ouverture arquée (22) pour recevoir la tige (20), ladite ouverture (22) comprenant des cavités (24) ;
et **en ce que** la tige (20) est mobile entre :
- une position de réglage dans laquelle la tige (20) n'empêche pas le mouvement relatif de rotation entre la première partie (12) et la seconde partie (16) ; et
- une position verrouillée dans laquelle la tige (20) est piégée à l'intérieur d'une des cavités (24) de l'ouverture (22), empêchant ainsi tout mouvement relatif de rotation entre la première partie et la seconde partie.

2. Appui-tête selon la revendication 1, **dans lequel** la tige (20) définit un axe longitudinal (X20) et dans lequel le déplacement de la tige entre sa position de réglage et sa position verrouillée est un déplacement selon l'axe longitudinal.

3. Appui-tête selon la revendication 1 ou 2, comprenant en outre un moyen (28), de préférence un ressort, pour ramener automatiquement la tige (20) en position verrouillée.

4. Appui-tête selon l'une quelconque des revendications précédentes, **dans lequel** la tige (20) définit au moins une fente transversale (26), de préférence en forme de zone aplatie.

5. Appui-tête selon la revendication précédente, **dans lequel** la tige (20) définit un axe longitudinal (X20) et **dans lequel,** en position de réglage, la fente transversale (26) est axialement au même niveau que l'ouverture et orientée radialement vers une cavité.

6. Appui-tête selon l'une quelconque des revendications précédentes, **dans lequel** la tige (20) est de section circulaire et **dans lequel** les cavités (24) de l'ouverture (22) sont de forme complémentaire.

7. Appui-tête selon l'une quelconque des revendications précédentes, **dans lequel** la second partie (16) est articulée sur la première partie (12).

8. Appui-tête selon la revendication précédente, **dans lequel** l'axe de pivotement (X10) de la partie mobile passe par le centre de courbure de l'ouverture (20).

9. Appuie-tête selon l'une quelconque des revendications précédentes, comprenant un cadre (14) sur lequel est fixée la première partie (12), ce cadre ayant deux tiges parallèles (14A, 14B), destinées à être enfoncées à l'intérieur de deux trous prévus dans la partie supérieure du dossier.

10. Appui-tête selon l'une quelconque des revendications précédentes, **dans lequel** la seconde partie (16) comporte un coussin (11).

11. Appui-tête selon l'une quelconque des revendications précédentes, **dans lequel** l'ouverture (22) délimite deux rangées de cavités (24) s'étendant le long de l'ouverture, chacune d'un côté de l'ouverture.

12. Appui-tête selon l'une quelconque des revendications précédentes, comprenant en outre un bouton-poussoir permettant à un utilisateur de déplacer la tige (20) selon son axe longitudinal (X20), entre sa position verrouillée et sa position de réglage.

13. Siège pour un véhicule, en particulier pour un bus, un camion ou un engin de chantier, comprenant un appui-tête selon l'une quelconque des revendications précédentes.

14. Véhicule comprenant un siège selon la revendication précédente.
